# EUROPEAN PATENT APPLICATION

(11) **EP 2 339 437 A2**
(43) Date of publication of application: **29.06.2011**
(21) Application number: 10193285.3
(22) Date of filing: 01.12.2010
(51) Int. Cl.: G06F 3/042, G06F 3/048, G06F 3/041

(54) **Improved touch screen device**

(30) Priority: 03.12.2009 GB 0921216
(71) Applicant: STMicroelectronics (Research & Development) Limited, Marlow, Buckinghamshire SL7 1YL (GB)
(72) Inventor: Stark, Laurence, Edinburgh, EH10 5PE (GB)
(74) Representative: Hayden, Nicholas Mark

(57) **Abstract**

Disclosed is a touch screen apparatus and a corresponding method of determining the relative pressure applied to a touch screen apparatus. The touch screen apparatus comprises a screen surface, at least one radiation source such as an LED and at least one corresponding sensor. The touch screen operates by emiting radiation from LED, along an optical path to the sensor. The optical path is substantially parallel with the surface within a sensing plane. The touch screen apparatus can determine the position on said surface of one or more touches by an object by sensing radiation levels in said sensing plane, and is also to determine the relative pressure applied to the surface by a touch based upon the speed of the touching object through the sensing plane.

## Description

This application relates to touch sensitive screens and in particular touch sensitive screens capable of resolving simultaneous touches at multiple points which are also pressure sensitive.

Touch screen systems implementing both multi-touch and pressure sensitive functionality are rare due to the difficulty in solving technical problems presented while maintaining cost-effectiveness. Reliably detecting the touch locations of multiple points, and their corresponding pressure levels, while ensuring that the quality of the display is not compromised by any screen overlays, presents a significant hurdle for most touch screen technologies.

Known touch screen technologies, and their known drawbacks, include:
- Capacitive: Does not scale up in size as well as other technologies, requires human touch for detection due to capacitive properties (does not work with gloved hand for example). Capacitive screen coating transparency about 90%.
- SAW (surface acoustic wave): requires soft object to absorb waves and detect touch points.
- Resistive: Resistive screen overlay can be damaged by sharp objects & has only about 75% transparency.
- Force-sensing: Does not allow multi-touch sensing with a solid screen, multiple points of contact are resolved to a single co-ordinate.

It is an object of the invention to address the issue of pressure sensitivity in multi-touch touch-screens.

In a first aspect of the invention there is provided an apparatus comprising a surface, at least one radiation source and at least one corresponding sensor operable such that radiation from said radiation source follows an optical path to said sensor that is substantially parallel with said surface within a sensing plane, such that said apparatus can determine the position on said surface of one or more touches by an object by sensing radiation levels in said sensing plane, wherein said apparatus is further operable to determine the relative pressure applied to the surface by a touch based upon a parameter related to the approaching speed of the touching object through the sensing plane.

Said apparatus may be operable such that measurements made to determine the approaching speed of the touching object through the sensing plane are made at a single height above said surface.

Said apparatus may also comprise a display, said surface being the display screen.

The approaching speed of the touching object may be determined by determination of the rate of change of said parameter from two or more frames imaged between the time said object enters the sensing plane and the time it touches the surface. Said parameter may comprise light intensity, and specifically the light intensity on the portion of the sensor affected by the touching object. Said sensor may comprise an array of individually addressed pixels and said device may be operable to determine the point of lowest intensity and to monitor movement of this point of lowest intensity during said two or more successive frames. Alternatively or in addition said device may be operable to determine said rate of change of intensity from the rate of change of the slope at one or more points on a light intensity profile across said array and/or the rate of change of the width between pixels registering the same intensity levels at one or more points on said light intensity profile. For example, one measurement point may be the midpoint between a touch threshold corresponding with the sensing plane and a minimum touch point corresponding with the display surface.

Said device may comprise said at least one radiation source and said at least one corresponding sensor arranged to emit in and detect radiation from said sensing plane. There may be first and second sets of radiation sources, each with corresponding sensors, both sets of radiation sourced emitting radiation in the sensing plan, said first set emitting radiation in a direction perpendicular to the second set. Said radiation sources and sensors may work together in either absorption, retro-reflective or imaging modes. "Sets" of radiation sources and sensors may include a single radiation source and/or sensor.

Said device may be operable to offset the integration phases of said first set of radiation sources and corresponding sensors in relation to said second set. Said offsetting should be such that only one of said first and second sets of radiation sources is turned on, and integration only performed on data from the corresponding set of sensors, at any one time. In a preferred embodiment, both of said offset integration phases for said first and second sets of radiation sources and corresponding sensors, should be performed in a total timeframe similar to that when performing said phases simultaneously. As a consequence said single integration phase speed may be substantially doubled in comparison to that practicable should integration be simultaneously performed on data from both sets of sensors

Said touch sensitive surface may be separately sensitive to two or more simultaneous touches, and may be able to determine each position of said two or more simultaneous touches.

In a further aspect of the invention there is provided an apparatus comprising a surface and first and second sets of radiation sources each with corresponding sensors, said radiation sources being arranged to emit radiation in a single sensing plane substantially parallel with said surface, said first set being operable to emit radiation perpendicular to the second set, such that said device can determine by sensing radiation levels in a sensing plane parallel with said surface, the position on said surface, of one or more touches by an object, wherein said device is operable to offset the integration phases of said first set of radiation sources and corresponding sensors, in relation to said second set.

Said apparatus may also comprise a display, said surface being the display screen.

Said apparatus may be operable such that radiation from said radiation sources follows an optical path to their corresponding sensor that is substantially parallel with said surface within the sensing plane. Said apparatus may be operable such that measurements made to determine the approaching speed of the touching object through the sensing plane are made at a single height above said surface.

Said offsetting should be such that only one of said first and second sets of radiation sources is turned on, and integration only performed on data from the corresponding set of sensors, at any one time. Both of said offset integration phases for said first and second sets of radiation sources and corresponding sensors, may be performed in a total timeframe similar to that when performing said phases simultaneously. As a consequence said single integration phase speed may be substantially doubled in comparison to that practicable should integration be simultaneously performed on data from both sets of sensors

Said radiation sources and sensors may work together in either absorption, retro-reflective or imaging modes.

Said surface may be separately sensitive to two or more simultaneous touches, and may be able to determine each position of said two or more simultaneous touches.

In a further aspect of the invention there is provided a method of determining the relative pressure applied to a surface of an apparatus which determines the presence and position of one or more touches comprising:
emitting radiation along an optical path that is substantially parallel with said surface within a sensing plane, to a sensor; sensing radiation levels in said sensing plane;
and determining the relative pressure applied to the surface by a touch based upon a parameter related to the approaching speed of the touching object through the sensing plane.

Measurements made to determine the approaching speed of the touching object through the sensing plane may be made at a single height above said surface.

Said parameter may comprise light intensity.

The approaching speed of the touching object may be determined by determination of the rate of change of said parameter from two or more frames imaged between the time said object enters the sensing plane and the time it touches the surface.

Said rate of change of light intensity may be determined from the rate of change of the slope at one or more points on a light intensity profile.

Said rate of change of light intensity may be determined from the rate of change of the width between pixels registering the same intensity levels at one or more points on a light intensity profile across said array.

The approaching speed of the touching object may be determined by determining the point of lowest intensity and movement of this point of lowest intensity may be monitored during said two or more successive frames.

Integration of a first set of imaging data from one direction in the sensing plane and a second set of imaging data from a second, perpendicular, direction in the imaging plane may be offset such that integration may be performed on only one set of data at any one time.

Integration of both sets of data may be performed in a total timeframe similar to that when performing said phases simultaneously.

A single integration phase speed may be substantially doubled in comparison to that practicable should integration be simultaneously performed on data from both sets of sensors.

### BRIEF DESCRIPTION OF THE DRAWINGS

Embodiments of the invention will now be described, by way of example only, by reference to the accompanying drawings, in which:
Figure 1 shows a sensor arrangement in cross-section according to an absorption mode assembly;
Figure 2 shows a light intensity profile for a single touch point detected by a sensor;
Figure 3 shows the evolution of the light intensity profile for a single touch point in absorption mode;
Figure 4 illustrates phase offset between the X-sensor and Y-sensor;
Figure 5 shows the light intensity gradient on screen during X illumination using the phase offset method illustrated in Figure 4; and
Figure 6 shows, for comparison, the light intensity gradient on screen using the conventional synchronised phase method.

### DETAILED DESCRIPTION OF THE EMBODIMENTS

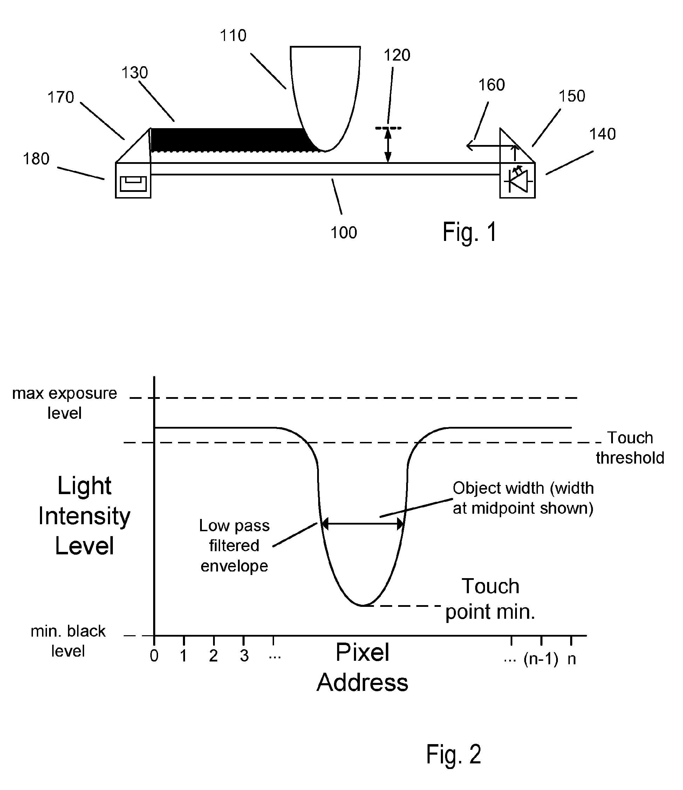

Figure 1 shows a touch sensitive screen arrangement. It shows a screen surface 100, a contacting object 110 (such as a finger), the z-plane detection limit 120, the finger's shadow 130, the illumination source (an LED in this example) 140, illumination optics 150, light beam 160, the imaging optics 170 and sensor pixel array 180.

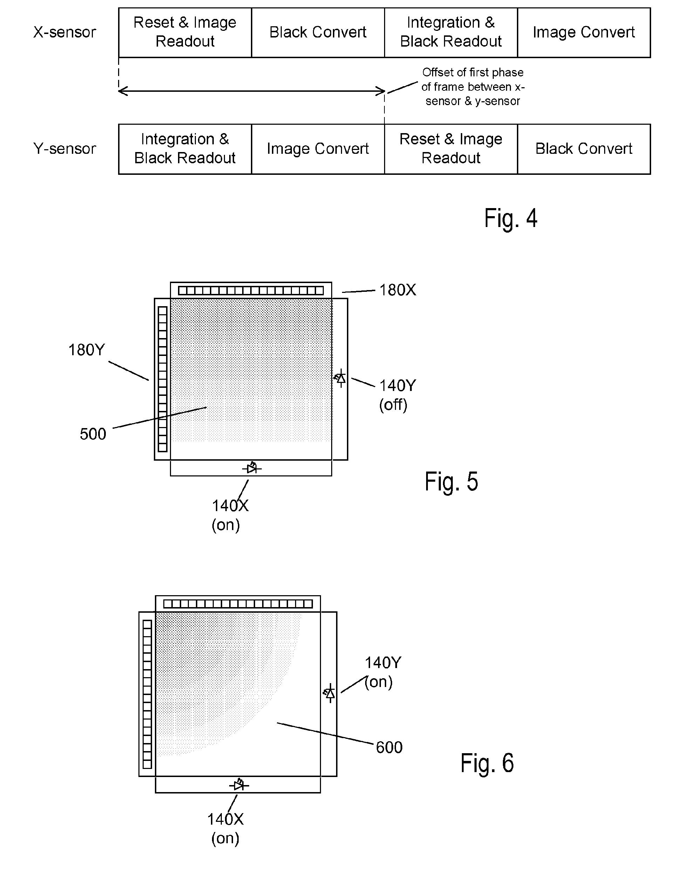

The system actually consists of two sensor arrays 180X, 180Y (as shown on Figure 5) mounted in a rectangular frame, an x-axis sensor and a y-axis sensor. The arrangement of the optics 150, 170 and polarity of the light intensity profile will depend on the mode in which the system is used. The system described is setup in an absorption mode, but can also be used in a retro-reflective or imaging mode:
- Absorption: each sensor will have a corresponding infrared LED mounted on the opposite side of the screen. Light is absorbed by the contacting object.
- Retro-reflective: light is reflected across the screen and back to the sensor.
- Imaging: the contacting object will be illuminated when it enters the z-plane detection zone.

The illumination optics 150 are used to focus and evenly distribute the light output 160 from the LEDs 140, across the screen along the respective axis, and onto the imaging optics 170 which in turn focuses the light onto the pixel array 180.

The z-dimensions of the imaging and illumination optics 170, 150 determine the height of the z-plane detection zone 120. The imaging and illumination optics should be matched in z-height to maximise the percentage of light from the illumination LED which is received by the pixel.

The inventor has determined that such a device can be made sensitive to the vertical (z-dimension) speed at which the contacting object 110 (e.g. a finger) approaches the screen 100, which in turn can be used to emulate sensing of the pressure applied to the screen 100 by said object 110.

When the contacting object 110 breaks the z-plane detection limit 120 of the optics 150, 170, it begins to block the light 160 directed at the pixel array 180, reducing the intensity levels recorded at the end of the frame for the affected pixels. When the contacting object 110 makes contact with the surface 100 of the screen, the light levels of the pixels 180 in the affected area will be at their lowest levels.

Figure 2 shows a graph illustrating how the light intensity level varies with the pixel address (that is position of the pixel) when the screen is touched. The trace shown is for an object actually contacting the screen. A touch point is initially detected when the light intensity profile for a frame drops below a defined 'touch threshold' level. Touch point detection could also be implemented by detecting a touch point when the light intensity profile gradient at a point exceeds a defined rate.

The speed sensing function may be performed through analysis of the movement of the detected minimum of a touch point for several successive frames and using this data to derive the speed of the contacting object. A number of frames, dependent upon both the frame rate of the system and the average velocity of the contacting object towards the screen whilst within the z-plane detection zone, between the contacting object first entering the z-plane detection zone and reaching the surface of the screen can be captured by the x and y sensors and stored in a memory bank. The speed of the contacting object moving through the z-plane detection zone can be shown to be directly proportional to the rate of change of light intensity of the pixels whose light intensity levels are affected by the contacting object blocking the projected light incident on them. Frames imaged between the time the object touches the surface and the time it leaves the sensing plane may also be used in a similar manner to those imaged before contact of the touching object to determine release 'pressure' for the detected touch co-ordinates.

The light intensity profiles of the stored frames allow the calculation of the rate of change of minimum light intensity for the detected touch point to be made. The speed of the detected touch is output as a proportionally scaled value based on the rate of change of light intensity. The rate of change of width at one or more points, such as the halfway points between the maximum and minimum levels or the points of maximum positive and negative slopes, can also be used to derive the speed either separately from or in conjunction with the minimum point.

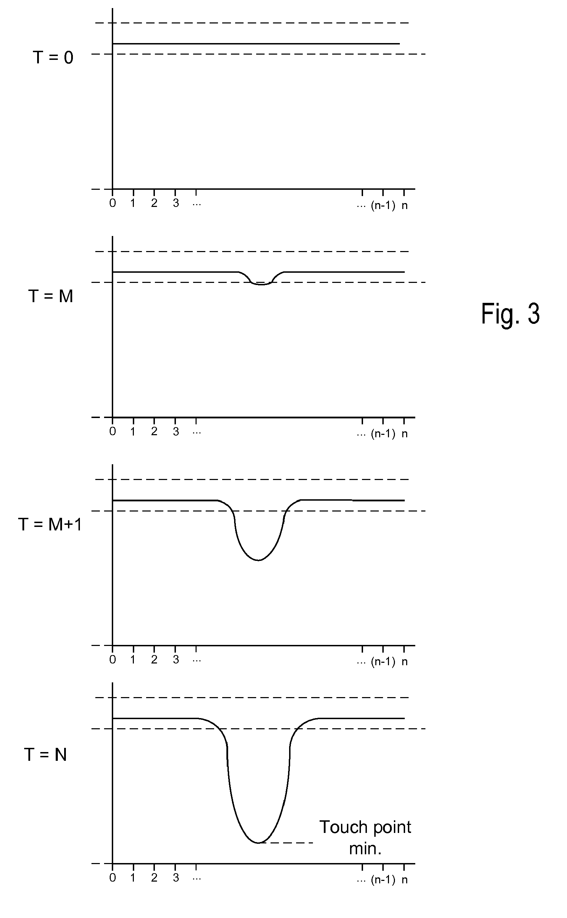

Figure 3 shows the evolution in time of a touch point through time for a finger as the contacting object.
- T = 0: No contacting object is within the z-plane detection zone, no touch is detected.
- T = M: A finger has entered the z-plane detection zone, causing the light levels to reach the touch threshold.
- T = M+1: The contacting object continues to travel towards the screen, the width of the profile has increased as the wider part of the finger enters the z-plane detection zone. The minimum light levels have decreased as the finger is closer to the screen and allows less light through to the pixels.
- T = N: The finger has come into contact with the screen and the amount of light received by the pixels is at its minimum point for the frames captured during the touch.

The accuracy of the speed sensing depends upon the number of frames captured whilst the contacting object is within the z-plane detection zone as a finer the temporal resolution will allow a greater number of samples of pixel data to be captured and hence improve the accuracy of the touch speed calculation. The temporal resolution of the system can be effectively doubled by doubling the clock frequency and offsetting the phases of the frames of the sensors so that when the X-sensor is in the reset & image readout phase, the Y-sensor will be in the integration phase.

Figure 4 illustrates the phase offset for such a method. This method has reduced hardware speed and bandwidth requirements when compared with merely doubling the master clock frequency of the system and synchronising the integration periods of both sensors. The Black Convert phase and the Image Convert phase should be equal in length, the Reset & Image Readout and the Integration & Black Readout phases should also be of equal length so as to create a length-symmetrical frame which is required to maintain synchronism of the phase change.

When both sensors have a light intensity profile for one or more touch points that is uncorrupted by close proximity of another point or vertical or horizontal alignment of the touch points; the data for a detected touch point from each sensor can be scaled and interpolated to form a single light intensity profile for a touch point with twice the temporal resolution of the data in the frames when compared with a system with the sensors' phases running synchronously.

Figures 5 and 6 illustrate another advantage of using such a method. During the integration phase of either one of the sensors, the illumination LED paired with it will be illuminated for a time necessary to ensure that the dynamic range of the light levels received by the pixel array is as high as it can be without causing saturation of the pixels. If a sensor is not in its integration phase, the LED paired with it will not be illuminated. The illumination of the LEDs is mutually exclusive and therefore the light intensity gradient across the screen during the capture of a frame will be linear in a direction perpendicular to the axis upon which the integrating sensor is mounted. This linear intensity gradient 500 (shown in Figure 5) is easier to compensate for in image processing calculations when compared with the skewed intensity gradient 600 (shown in Figure 6) which would be present if both LEDs were lit simultaneously.

The above embodiments are for illustration only and other embodiments and variations are possible and envisaged without departing from the spirit and scope of the invention. For example the actual type of touch sensitive screen is not relevant so long as it is of a type that uses the principle of sensing radiation levels in a plane parallel with a screen surface.

## Claims

1. An apparatus comprising a surface, at least one radiation source and at least one corresponding sensor operable such that radiation from said radiation source follows an optical path to said sensor that is substantially parallel with said surface within a sensing plane, such that said apparatus can determine the position on said surface of one or more touches by an object by sensing radiation levels in said sensing plane, wherein said apparatus is further operable to determine the relative pressure applied to the surface by a touch based upon a parameter related to the speed of the touching object through the sensing plane.

2. An apparatus as claimed in claim 1 wherein said parameter comprises light intensity.

3. An apparatus as claimed in claim 2 wherein said sensor comprises an array of individually addressed pixels, said apparatus being operable such that the approaching speed of the touching object is determined by determination of the rate of change of said parameter from two or more frames imaged between the time said object enters the sensing plane and the time it touches the surface.

4. An apparatus as claimed in claim 2 or 3 wherein said parameter specifically comprises the light intensity on the portion of the sensor affected by the touching object.

5. An apparatus as claimed in claim 3 or 4 being operable to determine said rate of change of light intensity from the rate of change of the slope at one or more points on a light intensity profile across said array.

6. An apparatus as claimed in claim 3 4, or 5 being operable to determine said rate of change of light intensity from the rate of change of the width between pixels registering the same intensity levels at one or more points on a light intensity profile across said array.

7. An apparatus as claimed in any of claims 3 to 6 being operable to determine the approaching speed of the touching object by determining the point of lowest intensity and to monitor movement of this point of lowest intensity during said two or more successive frames.

8. An apparatus as claimed in any preceding claim operable such that measurements made to determine the approaching speed of the touching object through the sensing plane are made at a single height above said surface.

9. An apparatus as claimed in any preceding claim comprising first and second sets of radiation sources, each with corresponding sensors, both sets of radiation sources emitting radiation in the sensing plane, said first set emitting radiation in a direction perpendicular to the second set.

10. An apparatus as claimed in claim 9 being operable to offset the integration phases of said first set of radiation sources and corresponding sensors in relation to said second set.

11. An apparatus as claimed in claim 10 operable such that said offsetting is such that only one of said first and second sets of radiation sources is turned on, and integration only performed on data from the corresponding set of sensors, at any one time.

12. An apparatus as claimed in claim 10 or 11 operable such that both of said offset integration phases for said first and second sets of radiation sources and corresponding sensors, is performed in a total timeframe similar to that when performing said phases simultaneously.

13. An apparatus as claimed in claim 12 wherein a single integration phase speed is substantially doubled in comparison to that practicable should integration be simultaneously performed on data from both sets of sensors.

14. An apparatus as claimed in any preceding claim wherein said surface is separately sensitive to two or more simultaneous touches, and is able to determine each position of said two or more simultaneous touches.

15. An apparatus as claimed in any preceding claim also comprising a display, said surface being the display screen.

16. A method of determining the relative pressure applied to a surface of an apparatus which determines the presence and position of one or more touches comprising:
emitting radiation along an optical path that is substantially parallel with said surface to a sensor, thereby defining a sensing plane;
sensing radiation levels in said sensing plane; and
determining the relative pressure applied to the surface by a touch based upon a parameter related to the approaching speed of the touching object, such as light intensity, through the sensing plane.
